(19) Europäisches Patentamt
European Patent Office
Office européen des brevets

(11) Veröffentlichungsnummer: **0 066 859**
**B1**

(12) # EUROPÄISCHE PATENTSCHRIFT

(45) Veröffentlichungstag der Patentschrift: **10.10.84**

(51) Int. Cl.³: **C 09 D 5/40**, C 09 D 3/49, C 25 D 13/06, C 08 L 63/10

(21) Anmeldenummer: **82104902.0**

(22) Anmeldetag: **04.06.82**

(54) **Kathodisch abscheidbares wässriges Elektrotauchlack-Uberzugsmittel.**

(30) Priorität: **06.06.81 DE 3122641**

(43) Veröffentlichungstag der Anmeldung: **15.12.82 Patentblatt 82/50**

(45) Bekanntmachung des Hinweises auf die Patenterteilung: **10.10.84 Patentblatt 84/41**

(84) Benannte Vertragsstaaten: **AT BE CH DE FR GB IT LI NL SE**

(56) Entgegenhaltungen: **EP - A - 0 004 090**
**AT - B - 344 295**

(73) Patentinhaber: **Herberts Gesellschaft mit beschränkter Haftung, Christbusch 25, D-5600 Wuppertal 2 (DE)**

(72) Erfinder: **Jaeger, Kurt Edgar, Ravensberger Strasse 9, D-5600 Wuppertal 1 (DE)**
Erfinder: **Klein, Klausjörg, Richard-Strauss-Allee 33, D-5600 Wuppertal 2 (DE)**
Erfinder: **Patzschke, Hans-Peter, Dr. Dr. Ing. Chem., Am Heckendorn 71, D-5600 Wuppertal 2 (DE)**
Erfinder: **Saatweber, Dietrich, Dr. Dipl.-Chem., Forststrasse 22, D-5600 Wuppertal 21 (DE)**

(74) Vertreter: **Türk, Dietmar, Dr. rer. nat. et al, Redies, Redies, Türk & Gille Patentanwälte Brucknerstrasse 20, D-4000 Düsseldorf 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 066 859 B1

BUNDESDRUCKEREI BERLIN

## Beschreibung

Der Einsatz von neutralisierten Kunstharzen, die mit Wasser verdünnbar sind, ist für die Lackiertechnik von hoher Bedeutung, weil durch einen geringen Lösemittelgehalt den Umweltschutzbemühungen entgegengekommen und die Feuer- und Explosionsgefahr herabgesetzt wird. Ein rationelles, automatisches Arbeitsverfahren wird durch die elektrophoretische Abscheidung der Bindemittel an der Kathode und Einbrennen des abgeschiedenen Films möglich. Die Wasserlöslichkeit wird dabei durch das Einführen von Aminogruppen in den Harzverband und Salzbildung mit Säuren erzielt. Solche kathodisch abscheidbaren Harze entwickeln im Gegensatz zu den anodisch abscheidbaren an der Kathode Wasserstoff, der das Harz nicht in nachteiliger Weise verändert. Außerdem gehen Metallionen bei annähernd neutralem pH-Wert nur am Anfang des elektrischen Beschichtens geringfügig in Lösung, so daß Verfärbungen oder Fleckenbildungen durch Eisen-Ionen vermieden werden.

Aus der DE-A-2 707 405 und der DE-A-2 707 482 sind selbstvernetzende Bindemittel für kathodisch abscheidbare Elektrotauchlacke bekannt, die Aminogruppen enthaltende Reaktionsprodukte von ungesättigten Copolymerisaten und/oder Polykondensaten und/oder Polyadditionsprodukten sind, welche pro 1000 Molekulargewichtseinheiten 0,5 bis 3 seiten- oder endständige Doppelbindungen tragen. Gemäß DE-B-2 732 902 können derartige Reaktionsprodukte zusammen mit Urethanverbindungen als Bindemittelsysteme für kathodische Abscheidungen eingesetzt werden. Als Nachteile dieser Bindemittel sind der herstellungsbedingte, relativ hohe Gehalt an organischen Lösungsmitteln, die Entstehung von Oberflächenstörungen (Krater, Rauhigkeit) in den Beschichtungen, die ungenügende Elastizität der Beschichtungen und Haftungsprobleme mit darauf aufgebrachten weiteren Beschichtungen zu nennen.

Aus der EP-A1-12 463 und EP-A1-40 867 sind Bindemittelsysteme bekannt, die aus im wesentlichen keine äthylenischen Ungesättigtheiten aufweisenden, jedoch Amino- und Hydroxylgruppen enthaltenden Harzen, kombiniert mit gesättigten nichtsauren Polyestern als Vernetzungsmittel, die mehr als eine $\beta$-Hydroxylestergruppe pro Molekül enthalten, und Härtungskatalysatoren bestehen. Beschichtungen mit diesen Bindemittelsystemen ergeben ungenügende Ergebnisse im Salzsprühtest auf nicht gebondertem oder gefettetem Stahl. Außerdem ergeben sich hohe Einbrennverluste, da die $\beta$-Hydroyestergruppen beim Erhitzen abgespalten werden und aus dem Überzugsfilm austreten.

In der EP-A1-4 090 und EP-A1-25 554 sind Bindemittelsysteme beschrieben, deren primäre und/oder sekundäre Aminogruppen mit Vernetzungsmitteln umamidieren, die veresterte endständige Carboxylgruppen enthalten. Ihr Nachteil besteht darin, daß für die Vernetzung mehr reaktive Aminogruppen notwendig sind, als für die Wasserlöslichkeit gebraucht werden, was zu einem verringerten Korrosionsschutz auf nicht gebonderten Eisenblechen führt.

Der vorliegenden Erfindung liegt die Aufgabe zugrunde, die bekannten Nachteile weitgehend zu vermeiden. Es wurde nun gefunden, daß dies überraschenderweise dadurch möglich ist, daß man Überzugsmittel verwendet, die die nachfolgend definierten Bindemittel enthalten.

Gegenstand der vorliegenden Erfindung ist demgemäß ein kathodisch abscheidbares wäßriges Elektrotauchlack-Überzugsmittel, das ein Kunstharz-Bindemittel mit Aminogruppen enthält, welches durch Protonisieren mit Säuren wasserlöslich gemacht werden kann, und das gegebenenfalls Pigmente, Füllstoffe, Korrosionsschutzinhibitoren, Lackhilfsmittel, Katalysatoren und in einer Menge bis zu 20 Gew.-%, bezogen auf das Gesamtgewicht des Überzugsmittels, organische Lösemittel enthält, das dadurch gekennzeichnet ist, daß es als Kunstharz-Bindemittel enthält

A) 50 bis 99 Gew.-%, bezogen auf die Gesamtmenge des Kunstharz-Bindemittels, von einem oder mehreren Amino-1,2-Epoxyharzen, wobei das Amino-1,2-Epoxyharz oder im Falle des Vorliegens mehrerer Amino-1,2-Epoxyharze deren Gemisch
   a) ein mittleres Molekulargewicht ($\overline{Mn}$) von 700 bis 10 000 hat,
   b) pro 1000 Molekulargewichtseinheiten 0,2 bis 3,6 seiten- oder endständig ethylenische Doppelbindungen enthält entsprechend einer Hydrierjodzahl von 5 bis 90,
   c) primäre und/oder sekundäre alkoholische Hydroxylgruppen enthält entsprechend einer Hydroxylzahl von 30 bis 450, und
   d) eine Aminzahl von 30 bis 150 aufweist,

B) 1 bis 50 Gew.-% eines im wesentlichen nichtsauren Polyesters einer Polycarbonsäure, der mindestens 2 endständige oder seitenständige, gesättigte und/oder ungesättigte $\beta$-Hydroxyestergruppen pro Molekül enthält, und ein mittleres Molekulargewicht von etwa 1500 bis 10 000 hat, und

C) lösliche und/oder unlösliche Umesterungskatalysatoren für die thermische Vernetzung von (A) und (B) bei Temperaturen über 140° C.

Das ungesättigte, hydroxylgruppenhaltige Amino-1,2-Epoxyharz (Komponente A) wird durch Reaktion von 1,2-Di- oder Polyepoxiden mit ungesättigten Carbonsäuren, und ungesättigten und gesättigten Aminen und/oder Aminoalkoholen hergestellt. Es hat vorzugsweise ein mittleres Molekulargewicht von 1500 bis 5000. Diesen Molekulargewichten entsprechen Viskositäten von etwa 0,5 bis 6,0 Pas nach Verdünnen mit Ethylenglykolmonoethern auf 50 Gew.-% bei 25° C. Das geeignete mittlere Molekulargewicht bzw. die geeignete Viskosität können auch dadurch erhalten werden, daß Harze mit

höherer und niedrigerer Viskosität bzw. Molekulargewicht vermischt werden.

Das Bindemittel der Komponente (A) enthält mindestens eine Aminogruppe pro Molekül. Die untere Grenze der Aminzahl sollte bevorzugt 50, besonders bevorzugt 70, die obere Grenze dagegen sollte bevorzugt bei 120, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so entsteht eine schlecht haftende Filmbildung bei der Abscheidung oder eine blasige Oberfläche. Die Bindemittel der Komponente (A) können solche sein, die im wesentlichen keine Carboxylgruppen aufweisen.

Hydroxylgruppenhaltige Amin-epoxyharze werden zweckmäßig aus Polyglycidylethern mit mindestens zwei 1,2-Epoxygruppen pro Molekül erhalten. Sie können hergestellt werden durch

a) Einführen von Glycidylgruppen in alkalischem Medium über z. B. Epichlorhydrin,
   - aa) in aliphatische, cycloaliphatische oder aromatische OH-funktionelle Harze, z. B. Epoxynovolake, unter Bildung von Polyglycidylethern,
   - ab) in aliphatische, cycloaliphatische oder aromatische COOH-funktionelle Harze unter Bildung von Polyglycidylestern, oder
   - ac) in aliphatische, cycloaliphatische oder aromatische $NH_2$-funktionelle Harze unter Bildung von Polyglycidylaminen,

b) Einpolymerisieren von ungesättigten Glycidylmonomeren wie Glycidyl(meth)acrylat, N-Glycidyl(meth)acrylamid oder Allylglycidylether in Acrylcopolymerisate.

Besonders bevorzugt gemäß a) ist, daß die 1,2-epoxidgruppenhaltigen Harze Polyglycidylether der allgemeinen Formel sind

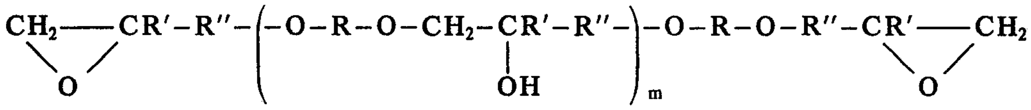

worin bedeuten

R = 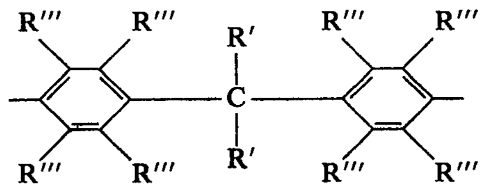

R' = Wasserstoff oder $-C_nH_{2n+1}$
R'' = $-(CR'_2)_n-$
R''' = R' oder Halogen, bevorzugt Wasserstoff
m = 0 bis 6
n = 1 bis 3

Sie haben ein mittleres ($\overline{Mn}$) von etwa 300 bis 2000 und ein Epoxiäquivalentgewicht von etwa 170 bis 1500. Solche Harze sind Umsetzungsprodukte von Epichlorhydrin mit Dioxi-diphenylmethan (Bisphenol F) oder Dioxi-diphenylpropan (Bisphenol A). Polyepoxide mit geeignetem Molekulargewicht werden entweder durch Auswahl der Reaktionsbedingungen bei der Umsetzung des Bisphenols mit Epichlorhydrin oder durch Umsetzung der monomeren Diglycidylverbindung mit weiterem Bisphenol oder mit langkettigen Polyalkoholen wie Hexandiol-1,6, Polytetrahydrofurandiol, Polycaprolactondiol, Polycaprolactamdiol oder Polybutadiendiol in Gegenwart von geeigneten basischen oder sauren Katalysatoren wie Borfluorid-Komplexen hergestellt. Es können auch entsprechende heterocyclische Polyepoxyverbindungen verwendet werden, wie 1,3-Diglycidyl-5,5-dimethylhydantioin, Triglycidylisocyanurat oder Diepoxyde aus Bisimiden.

Bevorzugt gemäß b) ist, daß die epoxygruppenhaltigen Harze Glycidyl(meth)acrylat-Copolymere sind, die durch Copolymerisation von Glycidylmethacrylat mit ungesättigten Monomeren erhalten wurden. Ungesättigte Monomere sind Styrol, Vinyltoluol, (Meth)acrylsäureester verschiedener Kettenlänge, wobei die Methacrylsäureester bevorzugt lineare oder verzweigte $C_1$- bis $C_4$-Alkohole und die Acrylsäureester bevorzugt lineare oder verzweigte $C_2$- bis $C_8$-Alkohole enthalten. Die Einführung der Aminogruppen kann entweder durch Copolymerisation mit ungesättigten Aminen wie Dialkyl-aminoalkyl-(meth)acrylaten, entsprechenden Acrylamiden oder N-Vinylimidazol, oder durch Reaktion von vorzugsweise sekundären Aminen oder Aminoalkoholen mit den Epoxygruppen erfolgen.

Das Einführen der Aminogruppen in die Komponente (A) erfolgt entweder durch Addition von NH-reaktiven Verbindungen an die Epoxygruppe oder durch Umsetzung der Hydroxylgruppen des Grundharzes mit basischen Monoisocyanaten, die durch Reaktion von aromatischen und/oder aliphatischen und/oder cycloaliphatischen Di- oder Polyisocyanaten mit einem Dialkylaminoalkanol (vgl.

DE-A-2 707 405) entstehen.

Als NH-reaktive Verbindungen werden verwendet primäre Monoalkylamine wie Dialkylaminoalkylamin und/oder bevorzugt sekundäre Monoamine wie Dialkylamine, Monoalkylhydroxyalkylamine oder Dihydroxyalkylamine. Beispiele für einsetzbare Verbindungen sind Diethylamin, Dimethylaminopropylamin, N-Methylaminoethanol oder Diethanolamin. Bei Verwendung von primären Aminen oder sekundären Diaminen tritt eine Kettenverlängerung ein, z. B. bei Einsatz von Additionsprodukten von Hexandiamin-1,6 mit 2 Mol Glycidylester der Versaticsäure. Als sekundäre Diamine, bevorzugt langkettige Diamine, können auch Alkyldiamino-alkane oder Umsetzungsprodukte von gesättigten Glycidylethern mit primären Diamino-alkanen verwendet werden. Die geeignete Hydroxylgruppenzahl entsteht dabei einmal automatisch aus der Epoxygruppe bei der Addition der sekundären Aminogruppen, zum anderen kann sie durch Einsatz von Hydroxylalkylaminen gesteuert werden.

Die Molverhältnisse zwischen epoxy- und aminogruppenhaltigen Verbindungen sind so zu wählen, daß vollständige Einbau des Amins gewährleistet ist, weil durchbruchartige Oberflächenstörungen beim elektrophoretischen Beschichten auftreten können, d. h. ein geringfügiger Überschuß an Epoxygruppen ist vorteilhaft. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120°C zu erhöhen. Das 1,2-epoxygruppenhaltige Harz wird vor Zugabe des Amins in organischen Lösemitteln wie Xylol, Methylisobutylketon, die später vor dem Verdünnen abdestilliert werden müssen, oder in Lösemitteln wie Ethylenglykolmonoethylether, Propylenglykol-monoethylether, Diethylenglykoldimethylether oder Diacetonalkohol, die in Lösung bleiben können, gelöst. Zum Entfernen von Aminresten ist gegebenenfalls ein Dünnschichtverdampfer oder eine Wasserdampfdestillation geeignet.

Das Einführen der ungesättigten Doppelbindungen in die Komponente (A) erfolgt entweder direkt durch Addition an die Epoxygruppen oder indirekt durch Umsetzung der Hydroxylgruppe des Grundharzes mit ungesättigten Monoisocyanaten, die durch Reaktion von aromatischen und/oder aliphatischen und/oder cycloaliphatischen Di- oder Polyisocyanaten mit $\alpha,\beta$-ungesättigten Monocarbonsäuren oder entsprechenden Carbonsäureamiden, wie Hydroxyalkyl-(meth)-acrylaten oder Dicarbonsäureestern von Hydroxyalkyl(meth)-acrylaten erhalten werden, wie sie in der DE-A-2 707 482 beschrieben werden. Es werden dabei Verbindungen ausgewählt, die aufgrund ihrer Strktur im Molekülverband weitgehend thermisch stabile Urethangruppen ergeben. Die direkte Addition an die Epoxygruppe kann beispielsweise mit Diallylamin, ungesättigten Fettaminen oder auch ungesättigten Fettsäuren erfolgen.

Als Kettenverlängerungsmittel können ungesättigte Dicarbonsäuren wie Fumarsäure oder dimerisierte Fettsäure oder auch Addukte von ungesättigten Monoepoxyverbindungen an Di- oder Polyaminen mit mindestens zwei primären Aminogruppen oder mindestens einer primären und einer sekundären Aminogruppe verwendet werden, wie Hexandiamin-1,6, 3-Amino-methylaminopropylamin, Diethylentriamin, Trimethylhexamethylendiamin und Isophorondiamin, entsprechend der Formel

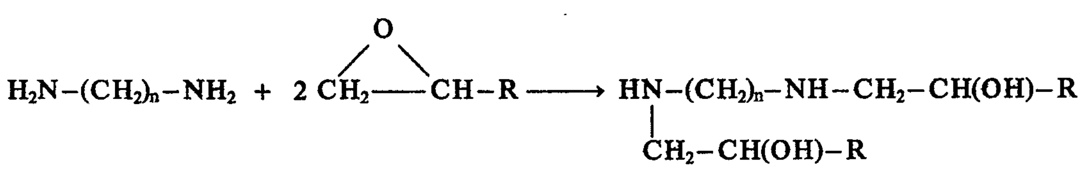

$R = -CH_2-O-CH_2-CH{=}CH_2$

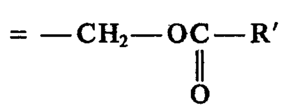

R′ = ungesättigter Kohlenwasserstoffrest von Fettsäuren

Als ungesättigte Monoepoxyverbindungen können dabei verwendet werden:

a) Glycidylester von linearen oder verzweigten, isoliert oder konjugiert ungesättigten $C_3$- bis $C_{18}$-Monocarbonsäuren,
b) Glycidylether von linearen oder verzweigten, isoliert oder konjugiert ungesättigten $C_3$- bis $C_{18}$-Monoalkoholen.

Die Aminogruppen der Polyamine werden dabei etwa stöchiometrisch mit so viel ungesättigten Monoepoxid-Verbindungen bei Temperaturen von etwa 50 bis 105°C umgesetzt, daß ein Molekül mit zwei reaktiven sekundären Aminogruppen entsteht, das als Kettenverlängerungsmittel mit weiterem Polyepoxid reagiert. Beispiele sind die Umsetzungsprodukte von einem Mol Glycidylallylether mit

Aminoethyl-ethanolamin oder von zwei Mol Linoleylglycidylester mit Ethylendiamin. Bei Verwendung von drei reaktiven Stellen werden Verzweigungen eingebaut. Eine Kettenverlängerung kann auch durch Einbau von ungesättigt substituierten primären Aminen wie primäres Allylamin, erfolgen.

Eine andere Herstellungsweise ist die Umätherung mit einem verätherten methylolierten (Meth)acrylamid, z. B. Methylolacrylamid-monobutylether, wie sie in der DE-A-2 934 467 beschrieben ist. Die Einführung ungesättigter Doppelbindungen kann auch auf gleiche Weise durch Umsetzung mit ungesättigten Formaldehyd-Kondensationsharzen wie Phenolplasten oder Aminoplasten erreicht werden. Geeignete Phenolharze sind z. B. Reaktionsprodukte von ein- und/oder mehrkernigen, gegebenenfalls alkylsubstituierten Phenolen mit Formaldehyd- oder Formaldehyd liefernden Verbindungen wie Paraformaldehyd. Die Methylolgruppen können teilweise oder voll verethert sein mit Methanol, Ethanol, Propanol, Butanol und/oder ungesättigten Monoalkoholen wie Allylalkohol, Hydroxylalkyl-(meth)acrylaten oder Oleylalkohol. Veretherte Phenolharze können auch durch Reaktion mit ungesättigten Monoepoxiden wie Glycidylallylethern oder Glycidylmethacrylat hergestellt werden. Eine weitere Modifizierung ermöglicht die Umsetzung mit ungesättigten Monocarbonsäuren wie (Meth)acrylsäure, Maleinsäure- oder Fumarsäure-monoestern oder ungesättigte Fettsäuren wie Oleinsäure, Linolsäure, Linolensäure oder ihren natürlichen Mischungen. Besonders geeignet sind niedrigmolekulare ungesättigte Phenolether wie die Polymethylolverbindungen vom Phenolallylether (Methylonharze der General Electric). Ungesättigte Aminoplaste können durch Reaktion der methylolierten Melamin-, Benzoguanamin- oder Harnstoffharze mit ungesättigten Monoalkoholen oder Monocarbonsäuren erhalten werden.

Das ungesättigte Amin-epoxyharz der Komponente (A) kann gegebenenfalls durch Einsatz entsprechender gesättigter Verbindungen modifiziert werden, um optimale technische Eigenschaften zu erzielen. Für die Erfindung ist es jedoch wesentlich, daß für die unterschiedlich ablaufenden Vernetzungsreaktionen sowohl ungesättigte Doppelbindungen als auch Hydroxylgruppen vorhanden sind. So liegt die untere Grenze der Hydroxylzahl über 80, ganz besonders über 120, die obere Grenze dagegen besonders unter 400, ganz besonders unter 350. Die untere Grenze der Hydrierjodzahl liegt über 10, ganz besonders über 20, die obere Grenze dagegen besonders unter 75, ganz besonders unter 60. Da beim Einführen von Aminogruppen und ungesättigten Verbindungen die Zahl der Hydroxylgruppen verringert werden kann, muß dieser Effekt bei der Zusammensetzung der Komponente (A) berücksichtigt werden. Um geeignete optimale Eigenschaften zu erzielen, ist es möglich, ein Gemisch von ungesättigten Amin-epoxyharz mit gesättigtem Amin-epoxyharz zu verwenden. Geeignete gesättigte hydroxylgruppenhaltige Amin-epoxyharze werden in der EP-A1-12 463 beschrieben. Auch solche Gemische müssen die oben angegebenen Kennzahlen für Molekulargewicht, Hydroxylzahl, Hydrierjodzahl und Aminzahl haben.

Die für den Vernetzungsprozeß wichtigen primären und/oder sekundären Hydroxygruppen können anteilweise durch primäre und/oder sekundäre Aminogruppen ersetzt werden. Solche Harze werden hergestellt durch stöchiometrische Umsetzung der Epoxygruppen mit amingruppenhaltigen Ketiminen und/oder Aldiminen oder auch durch Reaktion mit überschüssigem Etylendiamin und Abdestillieren des Aminüberschusses. Solche Herstellungsverfahren werden in der EP-A1-25 554 ausführlicher beschrieben. Ist die Zahl der umesterungs- oder umamidierungsfähigen Gruppen zu klein, so ist die Vernetzung nach dem Einbrennen ungenügend und der Film wird in organischen Lösemitteln zu gut löslich. Ist ihre Zahl zu hoch, so tritt eine Versprödung des Films ein.

Das für die Umsetzung bzw. Umamidierung notwendige Vernetzungsmittel (Komponente B) ist ein carboxylgruppenhaltiger Polyester oder ein carboxylgruppenhaltiges Copolymerisat, dessen Carboxylgruppen durch gegebenenfalls substituierte 1,2-Glykole unter Bildung von β-Hydroxyverbindung blockiert werden.

$$\text{Harz} -\left(-COO-CH_2-\underset{\displaystyle OH}{\underset{|}{CH}}-R\right)_m \qquad \text{(Komponente B)}$$

wobei

$$R = -CH_2-O-R', \quad -CH_2-O\underset{\displaystyle O}{\underset{\|}{C}}-R', \quad -CH_2-NH\underset{\displaystyle O}{\underset{\|}{C}}-R', \quad -R-H$$

$R' = -C_nH_{2n+1}, -C_nH_{2n-1},$

$n = 1-20$, bevorzugt $2-15$

$m = 2-15$, bevorzugt $3-8$

Die eingesetzten 1,2-Glykole sind erfindungsgemäß durch gesättigte oder ungesättigte Alkyl-, Ether-, Ester- oder Amidgruppen substituiert. Beim thermischen Vernetzen estert der β-Hydroxyester unter der Einwirkung von Katalysatoren mit den Hydroxyl- und/oder primären und/oder sekundären Aminogruppen der Komponente (A) unter Abspaltung des gegebenenfalls substituierten Glykols um.

Das Vernetzungsmittel enthält bevorzugt 2 bis 15 β-Hydroxyestergruppen pro Molekül und hat ein mittleres Molekulargewicht von 2000 bis 6000. Es wird eine Anzahl von 3 bis 8 β-Hydroxyestergruppen pro Molekül besonders bevorzugt. Beispiele für solche Vernetzungsmittel sind Poly(-2-hydroxyalkyl)-ester von aliphatischen, alicyclischen oder aromatischen Polycarbonsäuren mit mindestens 2 Carboxylgruppen, z. B. Polyethylenglykolterephthalat.

Nach EP-A1-12 463 können Polykondensate aus Trimellithsäureanhydrid und dem Glycidylester der Versaticsäure im Molverhältnis von etwa 1 : 1,8 bis 1 : 2,1 hergestellt werden.

Beim Einsatz von ungesättigten β-Hydroxyestern erfolgt über die Aktivierung der Doppelbindungen ein Einbau der thermischen Spaltprodukte in den Film. Auf diese Weise wird der Verlust an Filmsubstanz beim Einbrennen wesentlich verringert. Zum Aufbau eines ungesättigten Vernetzungsmittels erfolgt die Polykondensation bevorzugt stufenweise:

- zuerst durch Reaktion von Trimellithsäureanhydrid mit gesättigten Glycidylverbindungen oder Polyalkoholen, wobei Trimellithsäure im Überschuß eingesetzt wird,
- danach Umsetzung der nicht veresterten Carboxylgruppen mit einer zusätzlichen Menge ungesättigter Glycidylverbindungen oder Monoepoxyalkenen wie Epoxybuten, die aufgrund der Säurezahl äquivalent berechnet wird.

Bevorzugt sind ethylenische Doppelbindungen entsprechend einer Hydrierjodzahl von 5 bis 80, vorzugsweise 10 bis 50, vorhanden.

Die zweite Reaktionsstufe wird gegebenenfalls unter Zusatz von geeigneten Katalysatoren wie tertiären Aminen, Triphenylphosphin, Chromkomplexen oder anderen Friedel-Crafts-Katalysatoren durchgeführt. Dieses Verfahren gibt die Möglichkeit in der ersten Stufe ein anderes, möglichst verseifungsstabiles carboxylgruppenhaltiges Polykondensat einzusetzen. Hierfür ist auch ein carboxylgruppenhaltiges Acrylcopolymerisat geeignet, das durch Polymerisation von (Meth)acrylsäure, Styrol und (Meth)acrylsäureestern verschiedener Kettenlänge hergestellt werden kann. Als Polykondensat eignet sich besonders ein carboxylgruppenhaltiges Grundharz aus Trimellithsäureanhydrid und/oder Isophthalsäure und/oder Terephthalsäuredimethylester, kondensiert mit Ethylenglykol, Neopentylglykol und/oder anderen Polyolen wie Trimethylolpropan, Pentaerythrit, das danach in den praktisch neutralen β-Hydroxyester umgewandelt wird. Durch den Einbau von tertiären Aminoalkoholen wie Triethanolamin oder Methyl-diethanolamin oder auch Diaminoalkylaminen wie Dimethylaminopropylamin können hierbei auch basische Funktionen in die Komponente (B) eingeführt werden, die die Löslichkeit verbessern. Das Vernetzungsmittel kann gegebenenfalls eine Restsäurezahl enthalten, sie sollte jedoch nicht so hoch sein, daß das Harz aufgrund seiner Löslichkeit nicht mehr zur Kathode mitgeschleppt wird. Das Mischungsverhältnis der Komponenten (A) und (B) kann im Überzugsmittel in weiten Grenzen schwanken. Es liegt bevorzugt zwischen 80 : 20 und 60 : 40 und wird empirisch aus den optimal erreichbaren anwendungstechnischen Eigenschaften bei einer gegebenen Einbrenntemperatur bestimmt. Schon wenige Prozent von Komponente (B) können bei Zusatz zu Komponente (A) deren Krateranfälligkeit entscheidend verringern. Die Komponenten können kalt gemischt oder auch bei erhöhter Temperatur präkondensiert werden, wie das auch aus dem Stand der Technik (z. B. EP-A1-12 463) bekannt ist. Dabei reagieren die Komponenten (A) und (B) in gewissem Umfang miteinander, ohne daß das Gemisch seine Hitzehärtbarkeit und die Eigenschaft, durch Protonisieren mit Säuren wasserlöslich gemacht werden zu können, verliert.

Als Umesterungskatalysatoren, Komponente (C), werden 0,1 bis 10 Gew.-%, bevorzugt 2 bis 6 Gew.-% (der Komponenten (A) und (B)) Metalloxide, Metallsalze oder Metallkomplexe von ein- oder mehrwertigen Metallen verwendet. Sie werden im allgemeinen nach Salzbildung mit 2-Ethylhexansäure oder Naphthensäure in aliphatischen und aromatischen Kohlenwasserstoffen gelöst, und diese Lösung wird in das Elektrophoresebad einemulgiert. Eine andere Möglichkeit besteht in der Komplexbildung der Metalle mit Acetylacetonat oder Dicyclopentadien. Beispiele für geeignete Katalysatoren sind Antimontrioxid, Cobaltnaphthenat, Bleioctoat, Cadmium-acetylacetonat, Zinkacetylacetonat, Thallium-dicyclopentadien oder Triethanolamin-titanat. Bleioctoat oder Bleinaphthenat werden bevorzugt eingesetzt. Die Metallkatalysatoren können auch in fein verteilter Form als Pigmente wie Bleisilikat eindispergiert werden. Wasserlösliche Metallsalze sind ebenfalls als Umesterungskatalysatoren geeignet, wenn das Metall als Verbindung oder Komplex in fein verteilter Form mit dem Lack abgeschieden wird.

Durch Protonisieren mit Säuren wird das kationische Kunstharz-Bindemittel in an sich bekannter Weise wasserlöslich gemacht. Beispiele für Säuren sind Salzsäure, Ameisensäure, Essigsäure, Milchsäure, Zitronensäure, Malonsäure, Acrylsäure, Phosphorsäure oder Alkylphosphorsäure. Es muß mindestens so viel Säure zugegeben werden, daß eine Lösung des kationischen Kunstharz-Bindemittels erfolgt. Ein Überschuß an Säure, d. h. ein Neutralisationsgrad über 100%, ist zweckmäßig zu vermeiden.

Das Überzugsmittel kann zusätzlich übliche lacktechnische Zusatzstoffe wie Katalysatoren, Verlaufmittel, Antischaummittel usw. enthalten. Naturgemäß sind solche Zusatzstoffe auszuwählen, die mit Wasser bei saurem bis neutralem pH Wert keine störenden Reaktionen eingehen, keine störenden Fremdionen einschleppen und bei längerem Stehen nicht in nichtaufrührbarer Form ausfallen, d. h.

auch nach längerem Stehen muß sich das Überzugsmittel durch Rühren in eine brauchbare Dispersion überführen lassen.

Das Überzugsmittel kann zur Senkung der Viskosität, zur Steuerung der Abscheidespannung und zur Verbesserung der Haftung und des Verlaufs bis zu ungefähr 20 Gew.-% organische Lösemittel enthalten. Es wird ein möglichst niedriger Gehalt an organischen Lösemittel angestrebt, besonders unter 15 Gew.-%, ganz besonders unter 10 Gew.-%. Als Lösemittel dienen Alkohole, Glykolether, Ketolalkohole, gegebenenfalls unter Zusatz von aliphatischen und aromatischen Kohlenwasserstoffen verschiedener Kettenlänge. Bei der Auswahl muß berücksichtigt werden, daß die Komponente (B) in der Dispersion nicht gelöst wird und Anteile von wasserunlöslichen Lösemitteln den Dispergiervorgang erleichtern und stabilisieren können. Mit steigendem Lösemittelgehalt verschlechtert sich der Umgriff, und es können Überbeschichtungen auftreten; mit sinkendem Lösemittelgehalt verringert sich die abgeschiedene Schichtdicke.

Der Feststoffgehalt des Überzugsmittels gemäß der Erfindung beträgt durch Verdünnen mit Wasser zweckmäßig 5 bis 30 Gew.-%, vorzugsweise 10 bis 20 Gew.-%. Der pH-Wert des Lackes liegt im allgemeinen zwischen etwa 5,0 und 7,5, vorzugsweise zwischen 5,8 und 6,5. Liegt der pH-Wert zu niedrig, so treten Dispergierschwierigkeiten auf, und das Harz fällt aus. Liegt er zu hoch, so tritt eine verstärkte Elektrolyse auf, die die Oberfläche verschlechtert. Die elektrophoretische Abscheidung erfolgt zweckmäßig frühestens 24 Stunden nach Herstellung des Bades. Während dieser Zeit wird zweckmäßig kontinuierlich gerührt, um eine gleichmäßige Verteilung zu erreichen. Als Anode werden elektrisch leitfähige, nicht korrodierende Elektroden, z. B. aus nichtrostendem Stahl oder Graphit, verwendet. Der kathodisch zu beschichtende Gegenstand und die Anode werden, wie für die elektrophoretische Abscheidung bekannt, in ein wäßriges Bad getaucht. Es können alle metallisch leitenden Werkstücke beschichtet werden, z. B. Kupfer, Aluminium, Zinn, Zink, Eisen und Legierungen dieser Metalle. Während der Abscheidung wird das Bad bei Temperaturen von zweckmäßig etwa 15 bis 35° C gehalten. Festkörper, Abscheidetemperatur und -zeit, sowie Spannung werden so gewählt, daß die gewünschte Schichtstärke nach Abspülen mit Wasser und Einbrennen erhalten wird.

Beim Anlegen eines elektrischen Stromes mit einer Spannung von zweckmäßig 50 bis 500 Volt zwischen metallisch leitendem Werkstück und einer Gegenelektrode wird das wasserlösliche Trägerharz an der Kathode koaguliert. Es transportiert hierbei das wasserunlösliche Vernetzungsmittel, Pigmente usw. mit. Hierbei kann sich das Verhältnis von Pigment zum Kunstharzbindemittel im abgeschiedenen Film zugunsten des Pigments verschieben. Gleichzeitig werden Wasser und die zur Neutralisation verwendete Säure im Bad angereichert. Zum Nachfüllen müssen daher konzentrierte Lacke verwendet werden, die diese Verschiebungen durch Änderung der Mengenverhältnisse ausgleichen. Diese Korrektur kann auch durch geeignete apparative Einrichtungen, z. B. Elektrodialyseverfahren, erfolgen.

Die Bestimmung der Spaltprodukte erfolgt durch den Gewichtsverlust (bezogen auf die nach dem Vortrocknen ausgewogene Filmmenge), der entsteht, wenn man ein eine Stunde bei 100°C vorgetrocknetes, beschichtetes Blech zusätzlich 25 Minuten bei 180° C einbrennt.

## Beispiele

### Für die Beispiele verwendete Harze

### A1) Ungesättigtes Amin-epoxyharz

Wie auch in der DE-B-2 732 902, Spalte 9, Beispiel A4 beschrieben, werden zu einer Lösung von 12 159 g eines Epoxidharzes auf Bisphenol A-Basis (Epoxid-Äquivalentgewicht ca. 500) in 656 g Diethylenglykoldimethylether bei 100 bis 110°C in einer Stunde 264 g Diethanolamin zugetropft. Anschließend wird auf 150° C erhitzt und diese Temperatur eine weitere Stunde gehalten.

Das Reaktionsgut wird nun bei 60 bis 70°C mit 821 g der 70%igen Lösung eines Monoisocyanat (Molverhältnis 1 : 1) in Ethylenglykolmonoethyletheracetat versetzt und bis zu einem NCO-Wert von praktisch Null umgesetzt.

Das Bindemittel hat folgende Kennzahlen:

| | |
|---|---|
| Festkörpergehalt: | 69,3 Gew.-% (60 Minuten bei 125° C einbrennen) |
| Aminzahl: | 65 mg KOH/g Festharz |
| Hydroxylzahl: | 138 mg KOH/g Festharz |
| Hydrierjodzahl: | 22 |
| Epoxid-Äquivalentgewicht: | > 10 000 |

A2) Ungesättigtes Amin-epoxidharz

Wie auch in der DE-B-2 732 902, Spalte 9, Beispiel A2 beschrieben, werden 2262 g Epoxidharz auf Bisphenol A-Basis (Epoxid-Äquivalentgewicht ca. 260) in 2023 g Diethylenglykoldimethylether bei 60 bis 70°C gelöst und nach Zugabe von 0,8 g Hydrochinon und 2453 g eines Halbesters aus Tetrahydrophthalsäureanhydrid und Hydroxiethylmethacrylat auf 100 bis 110°C erwärmt. Die Temperatur von 100 bis 110°C wird so lange gehalten, bis die Säurezahl unter 3 mg KOH/g gesunken ist. Dann wird das Rekationsgut wie bei A1 mit 3262 g der 70%igen Lösung eines Monoisocyanats aus Toluylendiisocyanat und Dimethylethanolamin (Molverhältnis 1 : 1) in Diethylenglykoldimethylether umgesetzt.

A3) Gesättigtes Amin-epoxyharz

Gemäß EP-A1-12 463, Seite 17, Beispiel I(b) werden 391 g Diethanolamin, 189 g 3-(N,N-dimethylamino)-propylamin und 1147 g eines Adduktes aus 1,6-Diaminohexan und Cardura E 10 (eingetragenes Warenzeichen) (Molverhältnis 1 : 2) zu 5274 g Epoxidharz auf Basis Bisphenol A (Epoxid-Äquivalentgewicht ca. 472) in 2999 g Ethylenglykolmonobutylether gegeben. Die Mischung ird 4 Stunden lang unter Rühren bei 85 bis 90°C und dann eine Stunde lang bei 120°C gehalten.

A4) Amin-epoxyharzgemisch

1200 g der Lösung »A2« werden mit 800 g der Lösung »A3« 15 Minuten lang durch gutes Rühren vermischt.

Die Mischung hat folgende, auf einen Festkörpergehalt von 70,4 Gew.-% bezogene Kennzahlen:

| | |
|---|---|
| Aminzahl: | 72 mg KOH/g Festharz |
| Hydroxylzahl: | 136 mg KOH/g Festharz |
| Hydrierjodzahl: | 19 |
| Epoxid-Äquivalentgewicht: | >10 000 |

A5) Amin-epoxyharzgemisch

800 g der Lösung »A2« und 1200 g der Lösung »A3« werden 15 Minuten lang durch gutes Rühren vermischt.

Kennzahlen (bezogen auf Festkörpergehalt 70,1 Gew.-%):

| | |
|---|---|
| Aminzahl: | 75 mg KOH/g Festharz |
| Hydroxylzahl: | 193 mg KOH/g Festharz |
| Hydrierjodzahl: | 13 |
| Epoxid-Äquivalentgewicht: | >10 000 |

A6) Ungesättigtes Amin-epoxyharz

Vorprodukt D

528 g eines Epoxyharzes auf Basis Bisphenol A mit einem Epoxyäquivalentgewicht von 490 werden in 224 g Diethylenglykoldimethylether gelöst. Bei 60°C werden 38,3 g Diethanolamin zugegeben und diese Lösung gehalten, bis 1,33 Milliäquivalente (Epoxid und Amin) pro Gramm Lösung titriert werden. Danach wird ein Gemisch von 18,6 g Dimethylaminopropylamin und 11,6 g eines Additionsproduktes aus 1 Mol Hexandiamin-1,6 und 2 Mol Glycidylester der Versaticsäure zugegeben und die exotherme Reaktion abgewartet. Anschließend eine Stunde bei 90°C und dann 3 Stunden bei 120°C halten.

Verdünnen mit 75 g Diethylenglykoldimethylether auf einen Festkörper (40 Minuten Einbrennen bei 180°C) von 70 Gew.-%.

| | |
|---|---|
| Aminzahl: | 88 mg KOH/g Harz |
| Viskosität: | 513 mPas<br>(nach Verdünnen auf 50 Gew.-% mit Diethylenglykoldimethylether bei 25°C). |

945,5 g des Vorproduktes D werden mit 2 g Bleioctoat (72%ig), 2 g 4-Methyl-2,6-di-tert-butylphenol und 54,5 g Methylolacrylamid-mono-butylether gemischt und ansteigend von 100 bis 130°C zum

Schluß unter Anlegen eines leichten Vakuums 27,2 g n-Butanol abdestilliert.

| | |
|---|---|
| Festkörper: | 77,8 Gew.-% (40 Minuten 180°C) |
| Jodzahl: | 12 |
| Aminzahl: | 87 mg KOH/g Festharz |
| Viskosität: | 740 mPas (nach Verdünnen auf 50 Gew.-% mit Diethylenglykol-dimethylether bei 25°C). |

A7) Ungesättigtes Amin-epoxidharz

Vorprodukt E

In eine Lösung von 360 g Toluylendiisocyanat in 400 g Diethylenglykoldimethylether (wasserfrei) wurden bei 35°C in etwa einer Stunde 240 g Hydroxyethylacrylat (wasserfrei) unter gutem Rühren und unter Intertgasstrom eingetropft und anschließend 2 Stunden bei 60 bis 70°C gehalten.

| | |
|---|---|
| NCO-Gehalt: | 14,5% |
| Festkörper: | ca. 60 Gew.-% (40 Minuten 180°C) |

849,3 g Vorprodukt D und 150,7 g Vorprodukt E wurden 6 Stunden bei 80°C unter Inertgas gerührt.

| | |
|---|---|
| Festkörper: | 67,3 Gew.-% (40 Minuten 180°C) |
| Hydrierjodzahl: | 11 |
| Aminzahl: | 88 mg KOH/g Festharz |
| Viskosität: | 1190 mPas (nach Verdünnen auf 50 Gew.-% mit Diethylenglykol-dimethylether bei 25°C). |

A8) Ungesättigtes Amin-epoxiharz-Gemisch

1030 g des gesättigten Amin-epoxiharzes A3 wurden unter Zusatz von 170 g Ethylenglykol-monoethylether auf 80°C erwärmt und dann 800 g Methylonharz 57 108 der General Electric (Warenzeichen) zugegeben. Anschließend wurde auf 120°C erwärmt und diese Temperatur zwei Stunden lang gehalten.

| | |
|---|---|
| Festkörpergehalt: | 72,0 Gew.-% (40 Minuten bei 150°C einbrennen) |
| Viskosität: | 3,3 Pas (nach Verdünnen auf 60 Gew.-% mit Ethylenglykolmonobutylether) |

Das entstandene »Prekondensat« wurde zusätzlich 1982 g Amin-epoxyharz A3 und 497 g Ethylenglykol-monoethylether gemischt.

B1) Gesättigtes Vernetzungsmittel

Gemäß EP-A1-12 463, S. 17, Beispiel II(a), werden 781 g Trimellithsäureanhydrid bei 100°C in 1976 g Ethylenglykolmonobutylether gelöst und mit 2236 g Cardura E 10 (eingetragenes Warenzeichen) sowie mit 7 g Benzyldimethylamin vermischt.

Die Mischung wird auf 120°C unter Rühren erwärmt und gehalten, bis die Säurezahl unter 1,1 mg KOH/g gesunken ist.

Der Polyester hat die Kennzahlen:

| | |
|---|---|
| Festkörpergehalt (60 Minuten 125°C): | 70,7 Gew.-% |
| Säurezahl: | 0,7 mg KOH/g Festharz |
| Epoxid-Äquivalentgewicht: | $>$10 000 |

B2) Ungesättigtes Vernetzungsmittel

Vorprodukt C

514,2 g Hydroxipivalinsäure-neopentylglykol und 209,2 g Isophthalsäure werden bei ansteigender Temperatur bis maximal 238° C bis auf eine Säurezahl von 13,5 verestert, danach auf 180° C abgekühlt und 276 g Trimellithsäureanhydrid zugegeben. Es wird langsam auf 240° C aufgeheizt und diese Temperatur gehalten, bis die Säurezahl 108 beträgt.

| | |
|---|---|
| Viskosität: | 1000 mPas (nach Verdünnen auf 50 Gew.-% mit Monobutylglykolether bei 25° C) |

544 g Vorprodukt C werden mit 300 g Ethylenglykolmonobutylether, 2 g 4-Methyl-2,6-di-tert-butylphenol und 2 g Triphenylphosphit verdünnt. Nach Zusatz von 156 g Glycidylmethacrylat wird so lange bei 80° C gehalten, bis die Säurezahl kleiner als 2 ist. Falls die Säurezahl über 2 stehen bleibt und kein Epoxid mehr in der Lösung nachzuweisen ist, kann zusätzlich etwas Glycidylmethacryl at nachgegeben werden.

| | |
|---|---|
| Festkörper (40 Min. 180° C): | ca. 70 Gew.-% |
| Säurezahl: | 0,6 mg KOH/g Festharz |
| Hydrier-Jodzahl: | 38 |
| Viskosität: | 2900 mPas (nach Verdünnen auf 60 Gew.-% mit Monobutylglykolether bei 25° C). |

Beispiel 1

Zu 287 g Bindemittellösung A1 (Festkörpergehalt 69,3 Gew.-%) werden unter Rühren 50 g Ethylenglykolmonobutylether gegeben. In diese Mischung werden unter schnell laufendem Dissolver 106 g mikronisiertes Eisenoxidrot und 22 g Bleisilikat eindispergiert. Anschließend wird in einer Laborperlmühle vermahlen, wobei die Temperatur des Mahlguts nicht über 40° C steigen darf. Das Pigment-Konzentrat wird mit 287 g Bindemittellösung A1 und 240 g Polyester B1 (Festkörpergehalt 70,7 Gew.-%) komplettiert.

Zur Herstellung eines KTL-Bades werden unter gutem Rühren 50 g Milchsäure (80%ig in Wasser) und 3458 g voll entsalztes Wasser zugegeben.

Badwerte:

| | |
|---|---|
| Festkörpergehalt: | 14,8 Gew.-% (30 Minuten bei 180° C einbrennen) |
| pH-Wert (20° C): | 5,1 |
| $MEQ_S$-Wert: | 56 mval*) Säure/100 g Festkörper |
| spezifische Leitfähigkeit: | 1230 $\mu S \cdot cm^{-1}$ |

*) 1 mval ist die Stoffmenge, welche der Stoffmenge 1 mmol eines als einwertig erkannten Reaktionspartners äquivalent ist.

Aus dem KTL-Bad werden auf nicht phosphatierten Stahlblechen Lackfilme kathodisch abgeschieden, mit Wasser gespült und bei erhöhter Temperatur (15 Minuten 175° C Objekt) gehärtet.

Die Beschichtungen mit einer Trockenfilmdicke von 16 bis 18 µm werden mit einem Kreuzschnitt versehen und einer Salzsprühbelastung nach DIN 50 021 unterworfen. Nach 240stündiger Belastung wird eine Unterwanderung am Schnitt von 1 bis 2 mm festgestellt. Der Film ist frei von Flächenrost und Blasen.

Beispiel 2

290 g Bindemittellösung »A4« (Festkörpergehalt 70,4 Gew.-%) werden mit 119 g Vernetzungsmittel B1 (Festkörpergehalt 70,8 Gew.-%), 50 g Ethylenglykolmonobutylether und 12 g Bleioctoat (72%ig in Lackbenzin und Xylol, Bleigehalt 31%) vermischt. Mit Hilfe eines schnell laufenden Dissolvers werden 8 g Ruß, 80 g Aluminiumsilikat und 4 g Bleisilikat in die Bindemittel-Mischung eindispergiert und anschließend in einer Laborperlmühle vermahlen.

Nach weiterem Einrühren von 427 g Bindemittellösung »A4«, 20 g Eisessig und 3490 g voll entsalz-

tem Wasser entstand ein KTL-Lack mit den Badwerten:

| | |
|---|---|
| Festkörpergehalt: | 14,5 Gew.-% (30 Minuten bei 180°C einbrennen) |
| pH-Wert (20°C): | 6,4 |
| $MEQ_S$-Wert: | 53 mval Säure/100 g Festkörper |
| Spezifische Leitfähigkeit (20°C): | 640 $\mu S \cdot cm^{-1}$ |

Aus dem KTL-Bad werden auf nicht phosphatierten Stahlblechen Lackfilme, wie in Beispiel 1 beschrieben, abgeschieden und behandelt.

Außerdem werden Stahlbleche eine Minute lang in eine 5%ige Lösung des Mineralöls »Anticorit« (Lieferant: Rudolf Fuchs, Mineralölwerke KG, Duisburg) in Benzin 100—140 getaucht, 10 Minuten zum Ablüften stehengelassen und 2 Stunden bei 100°C in einem Umluft-Trockenschrank getrocknet. Diese geölten Bleche werden ebenfalls, wie in Beispiel 1 beschrieben, beschichtet und behandelt. Die Salzsprühbelastung wird dann ohne Schnitt im Trockenfilm durchgeführt.

## Vergleichsversuch 1

(nach EP-A1-12 463)

An Stelle von 290 g und 427 g Bindemittellösung »A4« in Beispiel 2 werden 290 g und 319 g der Lösung »A3« eingesetzt. Der Anteil an Polyester B1 wird entsprechend dem höheren Gehalt an Hydroxylgruppen im Bindemittel auf 227 g erhöht.

Das Bindemittel des kathodischen Elektrotauchbades ist somit im wesentlichen frei von end- oder seitenständigen Doppelbindungen.

Die Ergebnisse nach der Salzsprühbelastung DIN 50 021 sind in Tabelle 1 angegeben.

## Beispiel 3

Zu 290 g Bindemittellösung »A5« werden 20 g Bleioctoat (80%ig in Ethylenglykolmonobutylether) und 50 g Ethylenglykolmonobutylether gegeben. 8 g Ruß und 86 g Aluminiumsilikat werden wie in Beispiel 2 eindispergiert und vermahlen.

Mit 247 g Bindemittellösung »A5« und 159 g Polyester B1 (Festkörpergehalt 70,8 Gew.-%) wird wie in Beispiel 2 komplettiert. Zur Herstellung eines kathodisch abscheidbaren Elektrotauchlackes wird mit 23 g Ameisensäure (50%ig in Wasser) neutralisiert und mit 2870 g voll entsalztem Wasser verdünnt.

Badwerte:

| | |
|---|---|
| Festkörpergehalt: | 14,9 Gew.-% (30 Minuten bei 180°C einbrennen) |
| pH-Wert (20°C): | 5,7 |
| $MEQ_S$-Wert: | 51,6 mval Säure/g Festkörper |
| Spezifische Leitfähigkeit (20°C): | 1460 $\mu S \cdot cm^{-1}$ |

In dem KTL-Bad werden Stahlbleche wie in Beispiel 1 und ebenso geölte Stahlbleche wie in Beispiel 2 beschichtet und behandelt. Auf gleiche Weise werden Stahlbleche, die mit Bonder 132 (Zinkphosphatierung) behandelt sind, beschichtet und geprüft.

Die Ergebnisse nach der Salzsprühbelastung sind auch in Tabelle 1 aufgeführt.

## Beispiel 4

187,5 g des ungesättigten Amin-epoxyharzes »A6« werden gemischt mit 77,1 g ungesättigtem Vernetzungsmittel »B2«, 14,4 g Bleioctoat (72%ig) und 40 g Monobutylglykolether. Nach Zusatz von 13,5 g 80%iger Milchsäure wird mit 1667 g entionisiertem Wasser auf einen Festkörper von etwa 10 Gew.-% verdünnt.

| | |
|---|---|
| MEQ-Säure: | ca. 60 |
| pH-Wert: | 5,2 |
| Badleitfähigkeit: | 1050 $\mu Scm^{-1}$ |

Die Filme wurden 2 Minuten bei einer Badtemperatur von 25°C auf Bonder-127-Blechen abgeschieden, mit Wasser abgespült und 25 Minuten bei 160°C eingebrannt.

| | |
|---|---|
| Spaltprodukte: | 12,2 Gew.-% |
| Abscheidespannung: | 260 Volt<br>für 17 µm Trockenfilmstärke |
| Pendelhärte (DIN 53 157): | 134 Sekunden |

Beispiel 5

211,7 g des ungesättigten Amin-epoxyharzes »A7« werden gemischt mit 77,1 g ungesättigtem Vernetzungsmittel »B2«, 14,4 g Bleioctoat (72%ig) und 40 g Monobutylglykolether. Nach Zusatz von 13,5 g Milchsäure wird mit 1683 g entionisiertem Wasser auf einen Festkörper von etwa 10 Gew.-% verdünnt.

| | |
|---|---|
| MEQ-Säure: | ca. 60 |
| pH-Wert: | 4,7 |
| Badleitfähigkeit: | 888 $\mu Scm^{-1}$ |

Die Filme wurden 2 Minuten bei einer Badtemperatur von 25° C auf Bonder-127-Blechen abgeschieden, mit Wasser abgespült und 25 Minuten bei 160° C eingebrannt.

| | |
|---|---|
| Spaltprodukte: | 9,7 Gew.-% |
| Abscheidespannung: | 200 Volt<br>für 17 µm Trockenfilmstärke |
| Pendelhärte (DIN 53 157): | 213 Sekunden |

Vergleichsversuch 2

(nach EP-A1-12 463)

210,1 g eines gesättigten Amin-epoxyharzes ähnlich »A3« mit einem Festkörper von 69,3 Gew.-% werden gemischt mit 67,9 g eines gesättigten Vernetzungsmittels ähnlich »B1« mit einem Festkörper von 79,5 Gew.-%, 14,4 g Bleioctoat (72%ig) und 40 g Ethylenglykol-monobutylether gelöst. Nach Zusatz von 13,5 g 80%iger Milchsäure wird mit 1654 g entionisiertem Wasser auf einen Festkörper von etwa 10 Gew.-% verdünnt.

| | |
|---|---|
| MEQ-Säure: | ca. 60 |
| pH-Wert: | 5,4 |
| Badleitfähigkeit: | 1410 $\mu Scm^{-1}$ |

Die Filme wurden 2 Minuten bei einer Badtemperatur von 25° C auf Bonder-127-Blechen abgeschieden, mit Wasser abgespült und 25 Minuten bei 160° C eingebrannt.

| | |
|---|---|
| Spaltprodukte: | 21,6 Gew.-% |
| Abscheidespannung: | 190 Volt<br>für 17 µm Trockenfilmstärke |
| Pendelhärte (DIN 53 157): | 141 Sekunden |

Beispiel 6

13 g Ruß und 111 g Aluminiumsilikat werden mit 600 g des ungesättigten Amin-epoxyharz-Gemisches A8 in einer Laborperlmühle vermahlen.

Nach weiterem Einrühren von 243 g des ungesättigten Aminepoxyharz-Gemisches A8, 28 g Bleioctoat (72%ig in Lackbenzin und Xylol, Bleigehalt 31%), 149 g Vernetzungsmittel B1 und 29 g Ameinsensäure (50%ig in Wasser) wird mit 3827 g voll entsalztem Wasser unter gutem Rühren verdünnt.

Badwerte:

| | |
|---|---|
| Festkörpergehalt: | 15,0 Gew.-%<br>(30 Minuten bei 180° C einbrennen) |
| pH-Wert (20° C): | 5,6 |
| $MEQ_S$-Wert: | 52 mval Säure/100 g Festkörper |
| spez. Leitfähigkeit: | 1780 $\mu S\ cm^{-1}$ |

Aus dem KTL Bad werden Lackfilme auf phosphatierten und nicht phosphatierten Stahlblechen kathodisch abgeschieden, mit Wasser gespült und bei erhöhter Temperatur (15 Minuten 175°C Objekt) gehärtet.

Die Lackfilme sind hart und elastisch. Sie weisen nach den Salzsprühbelastungen bessere Ergebnisse als der Vergleichsversuch 1 auf.

Tabelle 1

Mechanische Werte und Ergebnisse des Salzsprühtests nach DIN 50 021

| | Mechanische Werte | | Substrat | Salzsprühtest | | |
|---|---|---|---|---|---|---|
| | Erichsen-Tiefung (mm) | Impact | | Belastungsdauer (h) | Unterwanderung am Schnitt (mm) | Fläche |
| Beispiel 2 | 6,1 | >50 IP | Stahlblech | 360 | 0,7—0,9 | frei von Blasen |
| Vergleichsversuch 1 | 6,3 | >50 IP | Stahlblech | 360 | 3,5—4,6 | starke Blasenbildung |
| Beispiel 3 | 6,0 | >50 IP | Stahlblech | 360 | 0,9—1,3 | frei von Blasen |
| Beispiel 2 | s.o. | s.o. | Stahlblech geölt | 240 | entfällt | frei von Blasen, kein Flächenrost |
| Vergleichsversuch 1 | s.o. | s.o. | Stahlblech geölt | 240 | entfällt | Bildung kleiner Blasen und Flächenroste |
| Beispiel 3 | s.o. | s.o. | Stahlblech geölt | 240 | entfällt | frei von Blasen, kein Flächenrost |
| Beispiel 3 | s.o. | s.o. | Bonder 132 | 504 | 0,8—0,9 | frei von Blasen |

**Patentansprüche**

1. Kathodisch abscheidbares wäßriges Elektrotauchlack-Überzugsmittel, das ein Kunstharz-Bindemittel mit Aminogruppen enthält, welches durch Protonisieren mit Säuren wasserlöslich gemacht werden kann, und das gegebenenfalls Pigmente, Füllstoffe, Korrosionsschutzinhibitoren, Lackhilfsmittel, Katalysatoren und in einer Menge bis zu 20 Gew.-%, bezogen auf das Gesamtgewicht des Überzugsmittels, organische Lösungsmittel enthält, dadurch gekennzeichnet, daß es als Kunstharz-Bindemittel enthält

A) 50 bis 99 Gew.-%, bezogen auf die Gesamtmenge des Kunstharz-Bindemittels, von einem oder mehreren Amino-1,2 -Epoxyharzen, wobei das Amino-1,2-Epoxyharz oder im Falle des Vorliegens mehrerer Amino-1,2-Epoxyharze deren Gemisch
   a) ein mittleres Molekulargewicht ($\overline{Mn}$) von 700 bis 10 000 hat,
   b) pro Molekulargewichtseinheiten 0,2 bis 3,6 seiten- oder endständige ethylenische Doppelbindungen enthält entsprechend einer Hydrierjodzahl von 5 bis 90,
   c) primäre und/oder sekundäre alkoholische Hydroxylgruppen enthält entsprechend einer Hydroxylzahl von 30 bis 450, und
   d) eine Aminzahl von 30 bis 150 aufweist,

B) 1 bis 50 Gew.-% eines im wesentlichen nichtsauren Polyesters einer Polycarbonsäure, der mindestens 2 endständige oder seitenständige, gesättigte und/oder ungesättigte $\beta$-Hydroxyestergruppen pro Molekül enthält, und ein mittleres Molekulargewicht von etwa 1500 bis 10 000 hat, und

C) lösliche und/oder unlösliche Umesterungskatalysatoren für die thermische Vernetzung von (A) und (B) bei Temperaturen über 140°C.

2. Überzugsmittel nach Anspruch 1, dadurch gekennzeichnet, daß es 60 bis 80 Gew.-% Komponente (A) auf 40 bis 20 Gew.-% Komponente (B) enthält.

3. Überzugsmittel nach Anspruch 1 oder 2, dadurch gekennzeichnet, daß das in Komponente (A) enthaltene Amino-1,2-Epoxyharz oder im Falle des Vorliegens mehrerer Amino-1,2-Epoxyharze deren

Gemisch ein mittleres Molekulargewicht ($\overline{Mn}$) von 1500 bis 5000 aufweist.

4. Überzugsmittel nach einem oder mehreren der Ansprüche 1 bis 3, dadurch gekennzeichnet, daß das in Komponente (A) enthaltene Amino-1,2-Epoxyharz oder im Falle des Vorliegens mehrerer Amino-1,2-Epoxyharze deren Gemisch eine Hydrierjodzahl von 10 bis 75, vorzugsweise von 20 bis 60 aufweist.

5. Überzugsmittel nach einem oder mehreren der Ansprüche 1 bis 4, dadurch gekennzeichnet, daß das in Komponente (A) enthaltene Amino-1,2-Epoxyharz oder im Falle des Vorliegens mehrerer Amino-1,2-Epoxyharze deren Gemisch eine Hydroxylzahl von 80 bis 400, vorzugsweise von 120 bis 350 aufweist.

6. Überzugsmittel nach einem oder mehreren der Ansprüche 1 bis 5, dadurch gekennzeichnet, daß das in Komponente (A) enthaltene Amino-1,2-Epoxyharz oder im Falle des Vorliegens mehrerer Amino-1,2-Epoxyharze deren Gemisch eine Aminzahl von 50 bis 120, bevorzugt 70 bis 100 aufweist.

7. Überzugsmittel nach einem oder mehreren der Ansprüche 1 bis 6, dadurch gekennzeichnet, daß die Komponente (B) eine Hydrierjodzahl von 5 bis 80, vorzugsweise 10 bis 50 aufweist.

8. Verwendung des Überzugsmittels nach Anspruch 1 zur kathodischen Abscheidung aus einem Lackbad auf elektrisch leitenden Oberflächen.

## Claims

1. An aqueous electrophoretic enamelling coating agent which may be deposited cathodically and which contains a synthetic resin binder having amino groups which may be rendered water-soluble by protonising with acids, and which optionally contains pigments, fillers, anti-corrosive inhibitors, lacquer auxiliaries, catalysts and, in a quantity up to 20% by weight, based on the total weight of the coating agent, organic solvents, characterised in that it contains the following as the synthetic resin binder:

A) from 50 to 99% by weight, based on the total quantity of the synthetic resin binder, of one or more amino-1,2-epoxy resins, and the amino-1,2-epoxy resin or, if several amino-1,2-epoxy resins are present, the mixture thereof has
   a) an average molecular weight ($\overline{Mn}$) of from 700 to 10 000,
   b) per 1000 molecular weight units, from 0.2 to 3.6 side or terminal ethylenic double bonds, corresponding to a hydrogenation iodine number of from 5 to 90,
   c) primary and/or secondary alcoholic hydroxyl groups, corresponding to a hydroxyl number of from 30 to 450, and
   d) an amine number of rom 30 to 150,

B) from 1 to 50% by weight of a substantially non-acid polyester of a polycarboxylic acid which has at least two terminal or side, saturated, and/or unsaturated $\beta$-hydroxyester groups per molecule, and has an average molecular weight of from about 1500 to 10 000, and

C) soluble and/or insoluble transesterification catalysts for the thermal cross-linking of (A) and (B) at a temperature above 140° C.

2. A coating agent according to claim 1, characterised in that it contains from 60 to 80% by weight of component (A) per 40 to 20% by weight of component (B).

3. A coating agent according to claim 1 or 2, characterised in that the amino-1,2-epoxy resin contained in component (A) or, if several amino-1,2-epoxy resins are present, the mixture thereof has an average molecular weight ($\overline{Mn}$) of from 1500 to 5000.

4. A coating agent according to one or more of claims 1 to 3, characterised in that the amino-1,2-epoxy resin contained in component (A) or, if several amino-1,2-epoxy resins are present, the mixture thereof has a hydrogenation iodine number of from 10 to 75, preferably from 20 to 60.

5. A coating agent according to one or more of claims 1 to 4, characterised in that the amino-1,2-epoxy resin contained in component (A) or, if several amino-1,2-epoxy resins are present, the mixture thereof has a hydroxyl number of from 80 to 400, preferably from 120 to 350.

6. A coating agent according to one or more of claims 1 to 5, characterised in that the amino-1,2-epoxy resin contained in component (A) or, if several amino-1,2-epoxy resins are present, the mixture thereof has an amine number of from 50 to 120, preferably from 70 to 100.

7. A coating agent according to one or more of claims 1 to 6, characterised in that component (B) has a hydrogenation iodine number of from 5 to 80, preferably from 10 to 50.

8. The use of the coating agent according to claim 1 for cathodic deposition from a lacquer bath on electrically conductive surfaces.

## Revendications

1. Produit de revêtement aqueux apte à électrodéposition cathodique en immersion contenant un

liant de résines synthétiques à groupes amino, qu'on peut rendre soluble dans l'eau par protonisation à l'aide d'acides, et contenant le cas échéant des pigments, des matières à charge, des inhibiteurs protégeant contre la corrosion, des produits auxiliaires pour peintures et vernis, des catalyseurs et, en quantité allant jusqu'à 20% du poids total du produit de revêtement, des solvants organiques, caractérisé en ce qu'il contient en tant que liant de résines synthétiques:

A) 50 à 99% du poids, par rapport à la quantité totale du liant de résines synthétiques, d'une ou plusieurs résines amino-1,2-époxydiques, la résine amino-1,2-époxydique ou, dans le cas de plusieurs résines amino-1,2-époxydiques, leur mélange
 a) ayant un poids moléculaire moyen $\overline{Mn}$ de 700 à 10 000,
 b) contenant de 0,2 à 3,6 doubles liaisons éthyléniques latérales ou terminales par 1000 unités de poids moléculaire, ce qui correspond à un indice d'iode à l'hydrogénation de 5 à 90,
 c) contenant des groupes hydroxy alcooliques primaires et/ou secondaires en quantité correspondant à un indice d'hydroxyle de 30 à 450 et
 d) présentant un indice d'amine de 30 à 150,

B) 1 à 50% en poids d'un polyester essentiellement non acide d'un acide polycarboxylique, contenant au moins deux groupes bêta-hydroxyester saturés et/ou insaturés en position terminale ou latérale par molécule, et ayant un poids moléculaire moyen d'environ 1500 à 10 000, et
C) des catalyseurs de transestérification solubles et/ou insolubles pour la réticulation à la chaleur de A) et B) à des températures supérieures à 140° C.

2. Produit de revêtement selon la rev. 1, caractérisé en ce qu'il contient de 60 à 80% en poids du composant A) pour 40 à 20% du poids du composant B).
3. Produit de revêtement selon la rev. 1 ou 2, caractérisé en ce que la résine amino-1,2-époxydique contenue dans le composant A) ou bien, dans le cas de plusieurs résines amino-1,2-époxydiques, leur mélange, présente un poids moléculaire moyen $\overline{Mn}$ de 1500 à 5000.
4. Produit de revêtement selon une ou plusieurs des rev. 1 à 3, caractérisé en ce que la résine amino-1,2-époxydique contenue dans le composant A) ou bien, dans le cas de plusieurs résines amino-1,2-époxydiques, leur mélange, présente un indice d'iode à l'hydrogénation de 10 à 75, de préférence de 20 à 60.
5. Produit de revêtement selon une ou plusieurs des rev. 1 à 4, caractérisé en ce que la résine amino-1,2-époxydique contenue dans le composant A) ou bien, dans le cas de plusieurs résines amino-1,2-époxydiques, leur mélange, présente un indice d'hydroxyle de 80 à 400, de préférence de 120 à 350.
6. Produit de revêtement selon une ou plusieurs des rev. 1 à 5, caractérisé en ce que la résine amino-1,2-époxydique contenue dans le composant A) ou bien, dans le cas de plusieurs résines amino-1,2-époxydiques, leur mélange, présente un indice d'amine de 50 à 120, de préférence de 70 à 100.
7. Produit de revêtement selon une ou plusieurs des rev. 1 à 6, caractérisé en ce que le composant B) présente un indice d'iode à l'hydrogénation de 5 à 80, de préférence de 10 à 50.
8. Utilisation du produit de revêtement selon la rev. 1, pour la déposition cathodique à partir d'un bain de peinture sur des surfaces conductrices de l'électricité.